(19) Europäisches Patentamt
European Patent Office
Office européen des brevets

(11) **EP 1 651 577 B1**

(12) **FASCICULE DE BREVET EUROPEEN**

(45) Date de publication et mention
de la délivrance du brevet:
**30.11.2011 Bulletin 2011/48**

(21) Numéro de dépôt: **04741981.7**

(22) Date de dépôt: **08.07.2004**

(51) Int Cl.:
***C02F 11/14** (2006.01)*

(86) Numéro de dépôt international:
**PCT/EP2004/051422**

(87) Numéro de publication internationale:
**WO 2005/014495 (17.02.2005 Gazette 2005/07)**

(54) **PROCEDE DE DESHYDRATATION DE BOUES ET BOUES AINSI DESHYDRATEES**

**VERFAHREN ZUM ENTWÄSSERN VON KLÄRSCHLÄMMEN UND DARAUS ENTWÄSSERTE KLÄRSCHLÄMME**

**METHOD FOR DEHYDRATING SLUDGE AND RESULTING DEHYDRATED SLUDGE**

(84) Etats contractants désignés:
**AT BE BG CH CY CZ DE DK EE ES FI FR GB GR HU IE IT LI LU MC NL PL PT RO SE SI SK TR**
Etats d'extension désignés:
**HR LT LV MK**

(30) Priorité: **11.07.2003 BE 200300401**

(43) Date de publication de la demande:
**03.05.2006 Bulletin 2006/18**

(73) Titulaire: **S.A. LHOIST RECHERCHE ET DEVELOPPEMENT**
**1342 Ottignies-Louvain-La-Neuve (BE)**

(72) Inventeurs:
• **REMY, Marc**
**1457 Nil-Saint-Martin (BE)**
• **JUDENNE, Eric**
**75011 Paris (FR)**
• **ROHMANN, Matthias**
**37441 Bad Sachsa (DE)**

(74) Mandataire: **Claeys, Pierre et al**
**Gevers**
**Intellectual Property House**
**Holidaystraat 5**
**1831 Diegem (BE)**

(56) Documents cités:
**EP-A- 0 408 545      DE-A- 3 643 205**
**GB-A- 2 134 508      US-A- 4 675 114**

• **PATENT ABSTRACTS OF JAPAN vol. 014, no. 242 (C-0721), 23 mai 1990 (1990-05-23) & JP 02 063600 A (EBARA INFILCO CO LTD;OTHERS: 01), 2 mars 1990 (1990-03-02)**

EP 1 651 577 B1

**Description**

La présente invention est relative à un procédé de déshydratation de boues, comprenant

- une addition d'un agent basique à des boues présentant un pH égal ou inférieur à 8,
- une addition aux boues d'au moins un composant organique floculant,
- par l'addition de l'agent basique susdit, une augmentation de pH des boues à une valeur inférieure à un pH à partir duquel a lieu une dégradation dudit au moins un composant organique,
- une floculation des boues, et
- une séparation dans les boues floculées entre des boues déshydratées et une phase liquide,

et aux boues ainsi déshydratées.

Par boues, il faut entendre au sens de la présente invention, toutes les boues, dont le pH initial est inférieur ou égal à 8, telles que, par exemple, les boues de station d'épuration des eaux urbaines et des industries agroalimentaires. On peut aussi envisager des boues de dragage ainsi que d'autres boues éventuellement plus acides. Dans ce cas, avantageusement ces boues sont préalablement amenées dans une gamme de pH d'au moins 6 à au plus 8, par neutralisation.

D'une manière générale, ces boues sont, au cours de leur traitement, tout d'abord décantées avant d'être épaissies. On les soumet ensuite à une floculation, suivie d'une déshydratation, réalisée, dans la plupart des cas, au moyen d'un filtre à bandes, d'un filtre-presse ou d'un décanteur centrifuge, en présence ou non de chauffage. Outre la réduction de volume, l'objet de ce traitement est de faciliter la manipulation, le stockage et le transport de ces boues.

La déshydratation des boues au moyen de floculants est bien connue. On a aussi déjà prévu, par exemple pour le traitement de boues de pêcheries, d'associer au floculant un agent assistant la floculation, qui est un composé de calcium soluble dans l'eau (voir par exemple JP-A-4-40286). On utilise, à titre de composé de calcium, soit des composés fortement basiques du type chaux, soit des sels de calcium comme des halogénures, du nitrate, de l'acétate. L'objectif recherché est une eau épurée résultant du traitement des boues.

On connaît aussi un procédé de déshydratation de boues dans lequel on prévoit, après le traitement de la boue par un floculant polymère, d'ajuster le pH à une valeur comprise entre 9 et 12 par addition d'oxyde ou d'hydroxyde de calcium ou de magnésium (voir US-A-4.675.114). Ce procédé nécessite en outre l'addition à la boue de formaldéhyde, qui est un produit toxique reconnu qui pose des problèmes d'environnement et qui est donc à éviter.

Tous ces procédés antérieurs, qui utilisent préférentiellement de la chaux pour aider à la floculation, nécessitent que l'élévation de pH soit suffisamment maîtrisée de manière à éviter toute dégradation trop rapide du floculant qui devient inactif aux pH très basiques. Certains procédés prévoient même une neutralisation pendant le procédé, avec ses conséquences sur le coût et sur la quantité d'eau à éliminer lors de la filtration.

Pour parvenir à cette maîtrise, on a prévu un procédé tel qu'indiqué au début, dans lequel on fait usage, comme agent basique, d'un composé calcique fortement basique qu'on a traité pour retarder la montée du pH du milieu dès l'addition de ce composé jusqu'à la fin de la floculation, le pH pouvant ensuite poursuivre cette montée dans les boues, de préférence même après déshydratation des boues traitées (voir WO-00/4527).

Toutefois, pour retarder la montée du pH, le composé calcique doit subir des traitements préalables, par exemple :

- l'augmentation de la taille moyenne des grains de l'additif calcique, en particulier pour éviter la présence de particules inférieures à 50 μm, ce qui impose une opération de défillerisation ou d'agglomération,
- l'addition d'un composé organique pour retarder la dissolution du composé calcique,
- la surcuisson du composé calcique qui devient ainsi moins réactif.

Ces opérations préalables sont coûteuses et dans certains cas introduisent des additifs étrangers dans les boues. De plus, le pH n'est malgré tout maintenu dans un intervalle compatible avec l'utilisation d'un floculant que pendant un temps court (quelques minutes), ce qui rend difficile l'opération de filtration avant la fin de ce délai.

Par ailleurs on connaît aussi un procédé d'inertage et/ou d'immobilisation de substances nuisibles dans des matières de type boues, ce procédé comprenant une addition à ces matières d'au moins un liant hydraulique, ce mélange étant additionné d'une matière inorganique contenant des composés de magnésium et/ou d'une matière inorganique contenant des composés d'aluminium (voir EP-B-0408545).

La présente invention a pour but de porter remède aux inconvénients précités et de mettre au point un procédé de déshydratation de boues aisé et permettant l'obtention de boues présentant des propriétés d'usage favorables, telles qu'une bonne tenue en tas, une pelletabilité, etc. Les boues obtenues doivent de préférence présenter des teneurs en matière sèche élevées, tout en faisant usage des floculants habituellement utilisés pour la floculation des boues.

Pour résoudre ces problèmes, on a prévu, suivant l'invention, un procédé tel que décrit au début, dans lequel l'agent basique susdit est un composé calcaro-magnésien répondant à la formule

$$xCaCO_3.(1-x)[yMg(OH)_2 + (1-y)MgO],$$

dans laquelle
x et y sont des fractions molaires,
$0,45 \leq x \leq 0,75$, et
$0 \leq y \leq 1$,
et les boues traitées présentent, jusqu'après ladite séparation, ladite valeur inférieure à un pH à partir duquel a lieu une dégradation dudit au moins un composant organique.

L'avantage particulier de ce procédé est que l'étape de séparation, c'est-à-dire de déshydratation, ne se voit pas imposer de contrainte de temps, puisque l'augmentation de pH nécessaire reste maîtrisée.

Il est apparu en effet, d'une manière inattendue, qu'il était possible d'obtenir, par l'addition du composé calcaro-magnésien suivant l'invention, à la fois un taux en matières sèches étonnamment élevé des boues déshydratées et à la fois une montée en pH douce et régulière jusqu'à un pH maximal qui reste en deçà du pH où les floculants usuels pour la floculation des boues perdent leur activité, en particulier un pH inférieur ou égal à 10. Les opérations de décantation, de filtration, de pressage et/ou de centrifugation peuvent être prises sans se presser et risquer d'atteindre un pH trop élevé. Les boues déshydratées selon le procédé suivant l'invention peuvent atteindre des taux de matière sèche supérieurs à 75 % en poids, avantageusement de 80 % en poids et même jusqu'à 90 % en poids et davantage. Il faut noter en outre que les boues continuent à présenter le pH existant au moment de la séparation.

Par ailleurs, lorsqu'on détermine la siccité des boues déshydratées obtenues suivant le procédé selon l'invention, on constate d'une manière inattendue un gain substantiel en siccité par rapport à la siccité qui aurait été obtenue si la même quantité de composé calcaro-magnésien suivant l'invention avait été ajoutée après déshydratation de la boue traitée. Cette siccité après traitement est calculée au moyen de la formule suivante

$$S2_{cal} = \frac{S1 \times (100 + t)}{100 + (S1 \times (t/100))}$$

où
S1 est la teneur en matière sèche du gâteau de boue sans composé calcaro-magnésien suivant l'invention, en pourcentage massique,
t est le taux d'ajout de composé calcaro-magnésien suivant l'invention, exprimé en pourcentage massique par rapport à la matière sèche contenue dans la boue épaissie, et
$S2_{cal}$ est la teneur calculée en matière sèche du gâteau de boue avec composé calcaro-magnésien suivant l'invention, en pourcentage massique, lorsqu'on admet qu'il n'y a pas d'effet additionnel du composé calcaro-magnésien sur la siccité du gâteau.

Préférentiellement, le composé calcaro-magnésien suivant l'invention est ce que l'on appelle une dolomie semi-calcinée, de formule $CaCO_3.MgO$, où la composante MgO peut être partiellement ou totalement sous forme de $Mg(OH)_2$. Cette dolomie semi-calcinée peut être obtenue par cuisson ménagée d'un carbonate double de calcium et de magnésium, dans des conditions telles que le contenu résiduel massique en CaO soit inférieur à 5 % et celui en MgCO3 soit inférieur à 10 %. La taille des particules de la dolomie semi-calcinée utilisée est de préférence inférieure ou égale à 5 mm. Ce composé est mélangé à la boue avant, simultanément ou après le floculant. Il est bien entendu qu'un tel composé peut contenir, selon son origine minérale, quelques impuretés, telles que par exemple de la silice ou de l'alumine.

Lorsque la valeur de x dans la formule donnée précédemment est inférieure à 0,45, on se trouve devant un produit que l'on ne peut pas obtenir à partir d'un carbonate double de calcium et de magnésium d'origine naturelle. Lorsque la valeur de x est supérieure à 0,75, la composante calcaire du composé calcaro-magnésien devient trop importante, elle ne permet plus une élévation de pH suffisante et surtout elle empêche tout gain satisfaisant en siccité des boues déshydratées.

En cas d'utilisation de dolomie semi-calcinée non hydratée, cet agent basique présente en outre, en plus d'être un ajout de matière sèche et d'aider à la floculation et à la filtrabilité des boues, l'avantage de provoquer un assèchement partiel des boues par réaction de la composante MgO avec l'eau.

L'ajout du composé calcaro-magnésien à la boue selon l'invention permet non seulement de rallonger très significativement le temps de contact de l'agent basique avec le floculant sans le dénaturer, mais aussi, de façon inattendue, d'atteindre des rendements de siccité très supérieurs à ceux obtenus par les solutions actuellement connues, de surcroît avec un composé qui ne nécessite aucune opération d'agglomération ou de défillerisation. La taille des grains de la dolomie semi-calcinée n'est en aucune façon critique dans le procédé suivant l'invention.

Suivant une forme préférée de réalisation de l'invention, le procédé comprend, après ladite séparation, une incinération des boues déshydratées.

D'autres modes de réalisation du procédé suivant l'invention sont indiqués dans les revendications annexées.

La présente invention concerne aussi une utilisation d'un composé calcaro-magnésien répondant à la formule

$$xCaCO_3.(1-x)[yMg(OH)_2 + (1-y)MgO],$$

dans laquelle
x et y sont des fractions molaires,
$0,45 \leq x \leq 0,75$, et
$0 \leq y \leq 1$,
pour le traitement et la déshydratation de boues présentant un pH égal ou inférieur à 8.

L'invention concerne également des boues déshydratées, comportant une teneur en composé calcaro-magnésien répondant à la formule
$xCaCO_3.(1-x)[yMg(OH)_2 + (1-y)MgO]$, dans laquelle x et y sont des fractions molaires, $0,45 \leq x \leq 0,75$, et $0 \leq y \leq 1$, et présentant un pH supérieur à 8 et égal ou inférieur à 10. Ces boues comportent avantageusement au moins 15 % en poids du composé calcaro-magnésien par rapport à la matière sèche de la boue avant déshydratation.

L'invention va à présent être expliquée de manière plus détaillée à l'aide des exemples non limitatifs donnés ci-après.

### Exemple 1

Un échantillon de boue épaissie présentant une teneur en matière sèche d'environ 3 % en poids a été traité avec trois réactifs différents, à savoir deux composés calciques -une chaux vive défillerisée par tamisage à 100 $\mu$m et une chaux vive surcuite- et une dolomie semi-calcinée ($d_{50}$ = 25-30 $\mu$m), selon la présente invention. Le même mode opératoire a été suivi dans les trois cas.

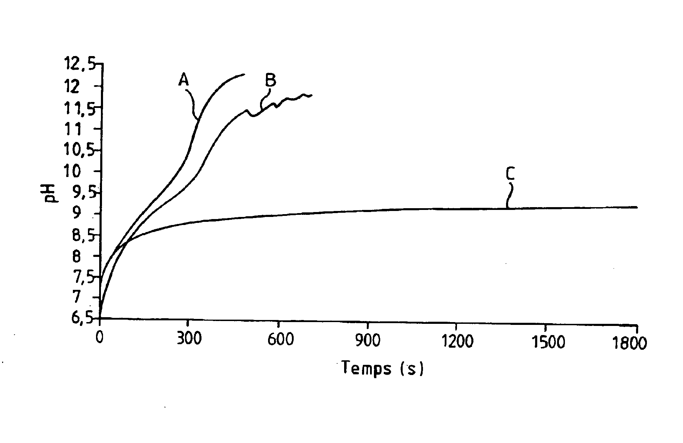

On introduit dans un récipient d'un litre une quantité de boue épaissie correspondant à 5 g de matière sèche. A cet échantillon, on ajoute 1,5 g d'additif; le mélange est alors agité au moyen d'un barreau magnétique et le pH de la solution est enregistré toutes les 5 secondes. L'évolution du pH dans chacun des cas apparaît à la Figure.

La Figure annexée est un graphique représentant l'évolution du pH en fonction du temps lors du conditionnement de boues par

- une chaux vive défillérisée (courbe A)
- une chaux vive surcuite (courbe B)
- une dolomie semi-calcinée suivant l'invention (courbe C).

On constate que seule l'utilisation de la dolomie semi-calcinée, selon l'invention, n'élève pas le pH à une valeur supérieure à 9,5 au-delà de 5 minutes. Cette valeur de pH est maintenue constante pendant au moins ½ heure, ce qui autorise un délai important entre l'addition du réactif et l'opération de déshydratation.

### Exemple 2

Filtration d'une boue conditionnée au moyen d'un floculant organique cationique usuel et de dolomie semi-calcinée suivant l'invention.

On introduit dans un récipient d'un litre une boue épaissie, présentant une matière sèche de 3 %, en quantité correspondant à 5 g de matière sèche. Cet échantillon de boue est alors traité selon la procédure suivante.

### Conditionnement

Selon l'invention, on ajoute successivement à la boue une quantité de dolomie semi-calcinée, correspondant à 45 % de la matière sèche présente dans l'échantillon de boue et 10 ml de solution aqueuse de floculant, à 5 g/l de matière active. Le mélange est alors agité durant 10 secondes à une vitesse de 200 tours par minute au moyen d'un floculateur de laboratoire.

### Filtration

La boue ainsi conditionnée est ensuite filtrée sur un filtre Büchner dont la partie filtrante est recouverte d'une toile de filtration en polyester (type NORDIFA Lainyl M14/CH/5 Fi).

On laisse alors la boue s'égoutter pendant 1 minute. On applique ensuite, sur la boue égouttée, successivement une pression de 1, 2, 3 et 4 bar au moyen d'un piston, chaque palier de pression durant une minute. Un gâteau d'une épaisseur de 3 à 5 mm est obtenu. La partie centrale de celui-ci est prélevée en vue de déterminer sa teneur en matière sèche, soit 25,3 %.

Afin de pouvoir évaluer l'influence de l'ajout de dolomie semi-calcinée suivant l'invention sur la teneur en matière sèche du gâteau de filtration, dans un deuxième essai la même boue épaissie a été floculée et puis filtrée suivant le protocole décrit ci-dessus, mais cette fois sans addition de dolomie semi-calcinée. Un gâteau de boue présentant une teneur en matière sèche de 16,4 % a été obtenu.

Si l'effet de la dolomie calcinée se limitait à l'apport de matière sèche à la boue, sans effet complémentaire sur la siccité, la teneur calculée en matière sèche du gâteau de boue $S2_{cal}$ en présence de dolomie semi-calcinée s'obtiendrait au départ de la teneur en matière sèche du gâteau de boue sans ajout de dolomie S1, au moyen de la formule donnée précédemment.

Dans cet exemple,

$$S2_{cal} = \frac{16,4 \times (100 + 45)}{[100 + (16,4 \times 45 / 100)]}$$

soit 22,1 %. Par ailleurs, la teneur effective du gâteau de boue avec dolomie semi-calcinée $S2_{eff}$ est de 25,3 %. La différence entre $S2_{eff}$ et $S2_{cal}$, rapportée à $S2_{cal}$, montre que l'ajout de dolomie semi-calcinée suivant l'invention permet d'obtenir une augmentation relative de siccité de 14,3 %, ce qui témoigne d'un effet additionnel inattendu de la dolomie semi-calcinée sur la siccité du gâteau.

A titre de comparaison du calcaire a été utilisé pour remplacer la dolomie semi-calcinée suivant l'invention dans les mêmes conditions opératoires et la teneur en matière sèche $S2_{eff}$ obtenue a été de 22,7 %. Si on compare cette valeur à $S2_{cal}$, la différence est de l'ordre de grandeur de l'erreur expérimentale et on ne peut donc pas conclure à un gain de siccité lors de l'usage de calcaire.

On peut en outre ajouter que le calcaire n'est pas un agent basique et que, lors de son ajout, le pH des boues n'augmente pas et reste dans le présent exemple de l'ordre de 7,35.

Exemple 3

Une boue de station d'épuration urbaine après décantation primaire a une teneur en matière sèche d'environ 3% en poids. Cette boue, après floculation avec un floculant cationique, du type polyacrylamide, et déshydratation sur filtre-presse sécheur, présente une teneur en matière sèche ou siccité après traitement de 64 % en poids.

La même boue, traitée dans des conditions identiques avec ajout de 25 % en poids de dolomie semi-calcinée (par rapport à la matière sèche de la boue) après la déshydratation sur filtre-presse sécheur, présente une siccité de 80 % en poids.

Enfin, la boue est floculée dans les mêmes conditions que décrites ci-dessus, mais en présence de 25 % en poids de dolomie semi-calcinée, avant déshydratation. Cette boue, après déshydratation sur filtre-presse sécheur, atteint une siccité de 97 % en poids.

On constate donc que, de manière inattendue, l'addition du composé calcaro-magnésien suivant l'invention améliore très nettement les rendements en siccité des boues traitées par rapport à une simple addition de floculant. Par ailleurs la même quantité de dolomie semi-calcinée, ajoutée avant déshydratation en présence de floculant, aboutit à une amélioration très significative du taux de siccité par rapport à l'addition ultérieure à la déshydratation. On doit aussi signaler que l'étape de mélange des réactifs/floculation de la boue peut atteindre, dans le cas présent, jusqu'à une heure et demie, ce qui est exclu lors de l'utilisation de chaux, et même de réactifs calciques traités pour ralentir la montée du pH comme ceux utilisés ci-dessus.

La co-addition de dolomie semi-calcinée suivant l'invention et d'un composant organique floculant avant la déshydratation de la boue présente non seulement l'avantage d'améliorer la siccité par rapport au procédé d'addition après déshydratation, avec les mêmes quantités de dolomie, mais elle simplifie aussi la conduite du procédé. En effet, le mélange des deux additifs (floculant et réactif) peut être réalisé en une seule étape, tandis que l'opération d'addition après déshydratation nécessite une seconde étape de mélange qui, de surcroît, est plus difficile à réaliser, compte tenu de la teneur réduite en eau après déshydratation.

Il doit être entendu que la présente invention n'est en aucune façon limitée aux modes de réalisation décrits ci-dessus et que bien des modifications peuvent y être apportées sans sortir du cadre des revendications annexées.

**Revendications**

1. Procédé de déshydratation de boues, comprenant

   - une addition d'un agent basique à des boues présentant un pH égal ou inférieur à 8,
   - une addition aux boues d'au moins un composant organique floculant,
   - par l'addition de l'agent basique susdit, une augmentation de pH des boues à une valeur inférieure à un pH à partir duquel a lieu une dégradation dudit au moins un composant organique,
   - une floculation des boues, et
   - une séparation dans les boues floculées entre des boues déshydratées et une phase liquide,

   **caractérisé en ce que** l'agent basique susdit est un composé calcaro-magnésien répondant à la formule

   $$xCaCO_3.(1-x[yMg(OH)_2 + (1-y)MgO],$$

   dans laquelle
   x et y sont des fractions molaires,
   $0,45 \leq x \leq 0,75$, et
   $0 \leq y \leq 1$,
   et **en ce que** les boues traitées présentent, jusqu'après ladite séparation, ladite valeur inférieure à un pH à partir duquel a lieu une dégradation dudit au moins un composant organique.

2. Procédé suivant la revendication 1, **caractérisé en ce que** le composé calcaro-magnésien est une dolomie semi-calcinée, comportant une composante MgO, éventuellement partiellement ou totalement sous forme de $Mg(OH)_2$.

3. Procédé suivant l'une ou l'autre des revendications 1 et 2, **caractérisé en ce qu'**il comprend ladite augmentation de pH à une valeur au maximum égale à 10.

4. Procédé suivant l'une des revendications 1 à 3, **caractérisé en ce que** l'addition du composé calcaro-magnésien a lieu préalablement, simultanément et/ou après l'addition dudit au moins un composant organique floculant.

5. Procédé suivant la revendication 4, **caractérisé en ce que** l'addition du composé calcaro-magnésien a lieu avant l'étape de séparation susdite.

6. Procédé suivant l'une quelconque des revendications 1 à 5, **caractérisé en ce qu'**il comprend, après ladite séparation, une incinération des boues déshydratées.

7. Procédé suivant l'une quelconque des revendications 1 à 6, **caractérisé en ce que**, dans le cas de boues acides, il comprend en outre une neutralisation préalable de ces boues acides de manière qu'elles présentent un pH d'au moins 6.

8. Procédé suivant l'une quelconque des revendications 2 à 7, **caractérisé en ce que** la dolomie semi-calcinée est issue d'une cuisson de carbonate double de calcium et de magnésium dans des conditions telles qu'elle contienne une teneur en CaO inférieure à 5 % en poids et une teneur en $MgCO_3$ inférieure à 10 % en poids.

9. Utilisation d'un composé calcaro-magnésien répondant à la formule $xCaCO_3.(1-x)[yMg(OH)_2 + (1-y)MgO]$, dans laquelle x et y sont des fractions molaires, $0,45 \leq x \leq 0,75$, et $0 \leq y \leq 1$, pour le traitement et la déshydratation de boues présentant un pH égal ou inférieur à 8.

10. Boues déshydratées, comportant une teneur en composé calcaro-magnésien répondant à la formule $xCaCO_3.(1-x)[yMg(OH)_2 + (1-y)MgO]$, dans laquelle x et y sont des fractions molaires, $0,45 \leq x \leq 0,75$, et $0 \leq y \leq 1$, et présentant un pH supérieur à 8 et égal ou inférieur à 10.

11. Boues déshydratées suivant la revendication 10, comportant au moins 15 % en poids du composé calcaro-magnésien par rapport à la matière sèche de la boue avant déshydratation.

**Claims**

1. Method of dewatering sludge, comprising

   - addition of a basic agent to sludge having a pH equal to or less than 8,
   - addition to the sludge of at least one flocculating organic component,
   - by the addition of the above mentioned basic agent, an increase in pH of the sludge to a value less than a pH as from which degradation of the said at least one organic component takes place,
   - flocculation of the sludge, and
   - separation of the flocculated sludge between dewatered sludge and a liquid phase,

   **characterised in that** the above mentioned basic agent is a calcaro-magnesian compound complying with the formula

   $$xCaCO_3.(1-x)[yMg(OH)_2 + (1-y)MgO],$$

   in which
   x and y are molar fractions
   $0.45 \leq x \leq 0.75$, and
   $0 \leq y \leq 1$,
   and **in that** the treated sludge has, until after the said separation, the said value lower than a pH as from which degradation of the said at least one organic component takes place.

2. Method according to claim 1, **characterised in that** the calcaro-magnesian compound is a half-burnt dolomite, comprising an MgO component, possibly partially or totally in the form of $Mg(OH)_2$.

3. Method according to one or other of claims 1 and 2, **characterised in that** it comprises the said increase in pH to a value of no more than 10.

4. Method according to one of claims 1 to 3, **characterised in that** the addition of the calcaro-magnesian compound takes place prior to, simultaneously with and/or after the addition of the said at least one flocculating organic compound.

5. Method according to claim 4, **characterised in that** the addition of the calcaro-magnesian compound takes place before the above mentioned separation step.

6. Method according to any one of claims 1 to 5, **characterised in that** it comprises, after the said separation, an incineration of the dewatered sludge.

7. Method according to any one of claims 1 to 6, **characterised in that**, in the case of acid sludge, it also comprises a prior neutralisation of this acid sludge so that it has a pH of at least 6.

8. Method according to any one of claims 2 to 7, **characterised in that** it the half-burnt dolomite issues from a burning of double calcium and magnesium carbonate under conditions such that it has a CaO content of less than 5% by weight and an $MgCO_3$ content of less than 10% by weight.

9. Use of a calcaro-magnesian compound complying with the formula $xCaCO_3.(1-x)[yMg(OH)_2 + (1-y)MgO]$, in which x and y are molar fractions, $0.45 \leq x \leq 0.75$, and $0 \leq y \leq 1$, for the treatment and dewatering of sludge having a pH equal to or less than 8.

10. Dewatered sludge, comprising a calcaro-magnesian compound content complying with the formula $xCaCO_3.(1-x)[yMg(OH)_2 + (1-y)MgO]$, in which x and y are molar fractions, $0.45 \leq x \leq 0.75$, and $0 \leq y \leq 1$, and having a pH greater than 8 and equal to or less than 10.

11. Dewatered sludge according to claim 10, comprising at least 15% by weight of the calcaro-magnesian compound with respect to the dry matter of the sludge before dewatering.

**Patentansprüche**

1. Verfahren zur Entwässerung von Schlämmen, umfassend

   - einen Zusatz eines basischen Mittels zu Schlämmen, die einen pH-Wert von höchstens 8 aufweisen,
   - einen Zusatz mindestens einer organischen Komponente mit Flockungswirkung zu den Schlämmen,
   - eine Erhöhung des pH-Werts der Schlämme durch Zusatz des oben genannten basischen Mittels auf einen Wert, der geringer als der pH-Wert ist, bei welchem die mindestens eine organische Komponente sich zu zersetzen beginnt,
   - eine Flockung der Schlämme, und
   - eine Abtrennung der entwässerten Schlämme von einer flüssigen Phase in den geflockten Schlämmen, ,

   **dadurch gekennzeichnet, dass** das oben genannte basische Mittel eine Kalk-Magnesia-Verbindung ist, die der folgenden Formel entspricht:

   $$xCaCO_3.(1-x)[yMg(OH)_2 + (1-y)MgO],$$

   wobei
   x und y die molaren Anteile sind,
   $0,45 \leq x \leq 0,75$, und
   $0 \leq y \leq 1$,
   und dadurch, dass die behandelten Schlämme bis nach der Abtrennung einen Wert aufweisen, der geringer als derjenige pH-Wert ist, bei welchem die mindestens eine organische Komponente sich zu zersetzen beginnt.

2. Verfahren gemäß Anspruch 1, **dadurch gekennzeichnet, dass** es sich bei der Kalk-Magnesia-Verbindung um einen halbgebrannten Dolomit handelt, der eine MgO-Komponente aufweist, welche möglicherweise teilweise oder vollständig in Form von $Mg(OH)_2$ vorliegt.

3. Verfahren gemäß einem oder mehreren der Ansprüche 1 und 2, **dadurch gekennzeichnet, dass** es die Erhöhung des pH-Werts auf höchstens einen Wert von 10 umfasst.

4. Verfahren gemäß einem der Ansprüche 1 bis 3, **dadurch gekennzeichnet, dass** der Zusatz der Kalk-Magnesia-Verbindung vor, nach und/oder gleichzeitig mit dem Zusatz der mindestens einen organischen Komponente mit Flockungswirkung erfolgt.

5. Verfahren gemäß Anspruch 4, **dadurch gekennzeichnet, dass** der Zusatz der Kalk-Magnesia-Verbindung vor dem oben genannten Abtrennungsschritt erfolgt.

6. Verfahren gemäß einem beliebigen der Ansprüche 1 bis 5, **dadurch gekennzeichnet, dass** es nach der Abtrennung eine Verbrennung der entwässerten Schlämme umfasst.

7. Verfahren gemäß einem beliebigen der Ansprüche 1 bis 6, **dadurch gekennzeichnet, dass** es im Falle saurer Schlämme darüber hinaus eine vorgeschaltete Neutralisierung dieser sauren Schlämme umfasst, sodass diese einen pH-Wert von mindestens 6 aufweisen.

8. Verfahren gemäß einem beliebigen der Ansprüche 2 bis 7, **dadurch gekennzeichnet, dass** der halbgebrannte Dolomit durch Brennen eines Doppelcarbonats von Calcium und Magnesium unter Bedingungen entsteht, die derart sind, dass er einen CaO-Gehalt von weniger als 5 Gewichts% und einen $MgCO_3$-Gehalt von weniger als 10 Gewichts% enthält.

9. Verwendung einer Kalk-Magnesia-Verbindung, die der Formel $xCaCO_3.(1-x)[yMg(OH)_2 + (1-y)MgO]$ entspricht, wobei x und y die molaren Anteile sind, $0,45 \leq x \leq 0,75$ und $0 \leq y \leq 1$, zur Behandlung und Entwässerung von Schlämmen, die einen pH-Wert von höchstens 8 aufweisen.

10. Entwässerte Schlämme, die einen Gehalt an einer Kalk-Magnesia-Verbindung aufweisen, welche der Formel $xCaCO_3.(1-x)[yMg(OH)_2 + (1-y)MgO]$ entspricht, wobei x und y die molaren Anteile sind, $0,45 = x = 0,75$ und $0 = y = 1$, und einen pH-Wert von mehr als 8 und höchstens 10 aufweisen.

11. Entwässerte Schlämme gemäß Anspruch 10, die mindestens 15 Gewichts% der Kalk-Magnesia-Verbindung aufweisen, unter Bezugnahme auf die Trockenmasse des Schlamms vor der Entwässerung.

## RÉFÉRENCES CITÉES DANS LA DESCRIPTION

**Documents brevets cités dans la description**

- JP 4040286 A
- US 4675114 A
- WO 004527 A
- EP 0408545 B